# FASCICULE DE BREVET EUROPEEN

(11) **EP 0 647 048 B1**
(45) Date de publication et mention de la délivrance du brevet: **24.05.2000**
(21) Numéro de dépôt: 94410078.3
(22) Date de dépôt: 20.09.1994
(51) Int. Cl.: H04M 1/72, H04M 1/00

(54) **Interface de ligne téléphonique pour un ensemble socle/terminal portable**
Telefonleitungsschnittstelle für eine Basisstation und ein dazugehörendes tragbares Endgerät
Telephone line interface for a base/portable terminal assembly

(30) Priorité: 23.09.1993 FR 9311811
(43) Date de publication de la demande: 05.04.1995
(73) Titulaire: Ascom Monétel SA, 07500 Guilherand-Granges (FR)
(72) Inventeur: Bernard, Jean-Louis, F-26500 Bourg Les Valence (FR); Gary, Didier, F-26120 Peyrus (FR)
(74) Mandataire: de Beaumont, Michel

(56) Documents cités:
- EP-A- 0 262 839
- EP-A- 0 282 597
- WO-A-92/00641
- GB-A- 2 250 160
- US-A- 5 048 073

## Description

La présente invention concerne la réalisation d'un socle destiné à recevoir un équipement portable, par exemple un terminal de paiement par carte, dans le but de l'alimenter et de le relier à une ligne téléphonique.

On a développé à l'heure actuelle divers équipements électroniques, et en particulier des terminaux portables de traitement pour réaliser des transactions de paiement en relation avec des cartes bancaires. Ces terminaux portables sont généralement associés à un socle pour, quand le terminal n'est pas utilisé, mettre ses batteries en état de charge, et lui permettre de communiquer avec une ligne téléphonique. Ainsi, le socle est connecté de façon permanente à une source d'alimentation, à un poste téléphonique et à une ligne téléphonique.

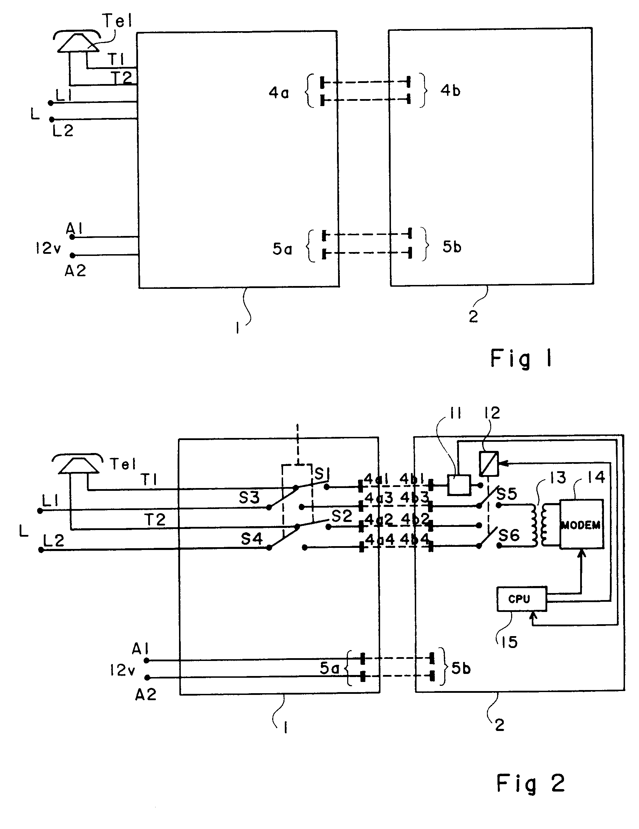

La figure 1 représente très schématiquement un socle 1 et un terminal portable 2. Le socle 1 est relié à des conducteurs d'alimentation A1 et A2, par exemple une source d'alimentation externe de 12 volts continus, à une ligne téléphonique L comprenant des conducteurs L1 et L2, et à un poste téléphonique TEL connecté par des fils T1 et T2. Un premier ensemble 4a et un deuxième ensemble 5a de contacts apparents sur le socle sont destinés à assurer un contact électrique avec des premier et second ensembles de contacts apparents correspondants 4b et 5b quand le terminal est posé sur le socle. Les contacts 4a, 4b sont affectés à la liaison téléphonique et les contacts 5a, 5b à l'alimentation. En ce qui concerne la liaison téléphonique, l'ensemble socle/terminal portable doit satisfaire aux conditions suivantes :
- en l'absence du terminal :
   . assurer une connexion entre le téléphone TEL et la ligne téléphonique L, et
   . isoler les contacts 4a de la ligne téléphonique (pour des raisons de sécurité, il faut éviter l'apparition de surtensions éventuelles de la ligne sur ces contacts qui pourraient être touchés par un utilisateur) ;
- en présence du terminal :
   . maintenir la ligne téléphonique reliée au téléphone par l'intermédiaire des circuits du terminal, ou
   . sur commande, par suite de la réception d'un signal sur la ligne ou par suite d'un ordre provenant des circuits logiques du terminal, coupler un modem du terminal à la ligne téléphonique.

La liaison d'alimentation entre les bornes 5a et 5b, destinée à recharger une batterie du terminal portable, ne pose pas de problèmes particuliers. On pourra, selon les options choisies, alimenter les conducteurs d'alimentation A1 et A2 par le secteur, le socle comprenant alors des moyens de redressement et de fourniture d'une tension appropriée, par exemple 12 volts, ou bien alimenter directement le socle sous une tension de 12 volts. De toute manière, il existe actuellement des convertisseurs de courant alternatif en courant continu simples et peu encombrants qui permettent de résoudre ce problème sans difficultés particulières.

Par contre, dans les ensembles socle/terminal connus, il se pose un problème en ce qui concerne la liaison téléphonique entre le socle et le terminal. En effet, on constate dans les ensembles actuellement commercialisés, qu'il est toujours prévu dans le socle des circuits électroniques destinés au moins à détecter l'existence d'un signal sur la ligne téléphonique pour assurer les diverses fonctions de prise de ligne. On se trouve donc en présence d'un ensemble qui comprend, dans le terminal portable, de nombreux circuits électroniques nécessaires à la mise en oeuvre des fonctions de ce terminal portable et, dans le socle, certains circuits destinés à assurer des fonctions de détection et de mise en communication. La présence de ces fonctions électroniques dans le socle implique en outre qu'il faut prévoir pour assurer l'isolement souhaité des relais assurant une fonction de protection contre des surtensions. Ces relais sont alors relativement encombrants.

On connaît aussi des ensembles socle/terminal portable dans lesquels la liaison de communication de données entre le socle et le terminal est assurée par un couplage optique. Ceci résout bien entendu les problèmes d'isolement mais complique encore les circuits électroniques contenus dans le socle.

En fait, l'une des sources de coûts importantes dans la réalisation de circuits électroniques réside dans les coûts de montage sur une carte de circuit imprimé. Le fait de disposer dans un ensemble donné des circuits sur plusieurs cartes de circuit imprimé alors qu'ils pourraient être disposés sur un plus petit nombre de cartes ou une seule carte augmente considérablement le coût d'ensemble.

Ainsi, un objet de la présente invention est de prévoir un ensemble socle/terminal dont le coût soit réduit.

Un autre objet de la présente invention est de prévoir un ensemble socle/terminal dans lequel le coût du socle soit réduit.

Un autre objet de la présente invention est de prévoir un ensemble socle/terminal dans lequel tous les circuits électroniques destinés à la fonction de communication soient contenus dans le terminal.

Pour atteindre ces objets, la présente invention prévoit un ensemble socle/terminal portable dans lequel le socle est relié à un poste téléphonique et à une ligne téléphonique et dans lequel la liaison entre le terminal et la ligne téléphonique est assurée quand le terminal est posé sur le socle par des contacts apparents en regard. Cet ensemble comprend, pour assurer ladite liaison, quatre contacts sur le socle et quatre contacts sur le terminal. Le socle comprend des mayens de commutation actionnés ensemble par le poids du terminal pour :
- quand le terminal est posé sur le socle, relier les quatre contacts du socle, et donc du terminal, respectivement aux deux fils du téléphone et aux deux conducteurs de la ligne téléphonique, et
- quand le terminal est soulevé du socle, établir une liaison entre chaque fil de la ligne et chaque fil du téléphone, les contacts du socle n'étant alors plus connectés.

Selon un mode de réalisation de la présente invention, les moyens de commutation comportent quatre commutateurs qui comprennent un premier et un deuxième commutateur à une voie entre les fils du poste téléphonique et les premier et deuxième contacts, ces premier et deuxième commutateurs étant ouverts en l'absence du terminal, et un troisième et un quatrième commutateur à deux voies dont les bornes fixes sont reliées aux conducteurs de la ligne et dont les bornes mobiles sont reliées, ou bien, aux bornes du poste téléphonique, ou bien, en présence du terminal, aux troisième et quatrième contacts (4a3, 4a4).

Selon un mode de réalisation de la présente invention, le terminal portable comprend des cinquième et sixième commutateurs à deux voies dont les bornes communes sont reliées aux troisième et quatrième contacts et dont les bornes mobiles sont reliées, ou bien à un transformateur de ligne, ou bien aux premier et deuxième contacts, ce terminal comprenant en outre un détecteur de signal interposé entre les premier et deuxième contacts et les bornes mobiles des cinquième et sixième commutateurs, un circuit de prise de ligne et une unité centrale et un modem.

Ces objets, caractéristiques et avantages, ainsi que d'autres de la présente invention seront exposés en détail dans la description suivante de modes de réalisation particuliers faite à titre non limitatif en relation avec les figures jointes parmi lesquelles :
la figure 1, décrite précédemment, illustre le problème posé ; et
la figure 2 représente de façon très schématique un ensemble socle/terminal portable selon la présente invention.

Dans les figures 1 et 2, des éléments correspondants sont désignés par de mêmes références.

Comme le représente la figure 2, la présente invention prévoit, pour assurer la liaison téléphonique entre le socle et le terminal portable, quatre contacts 4a1 à 4a4 sur le socle et quatre contacts correspondants 4b1 à 4b4 sur le terminal portable. Des commutateurs S1 à S4 sont prévus dans le socle et sont actionnés mécaniquement sous l'effet du poids du terminal portable pour que, quand le terminal portable est posé sur le socle, chacun des fils T1 et T2 du téléphone soit relié aux contacts 4a1 et 4a2 et chacun des conducteurs L1 et L2 de la ligne téléphonique soit relié aux contacts 4a3 et 4a4. Quand le terminal portable est soulevé du socle, ces commutateurs changent de position de sorte que chacun des fils du téléphone est relié à un conducteur de la ligne téléphonique et que les contacts 4a1 à 4a4 sont isolés de la ligne et du téléphone. Plus particulièrement, des commutateurs à une voie S1 et S2 sont couplés entre les fils de téléphone T1 et T2 et les contacts 4al et 4a2 et des commutateurs à deux voies S3 et S4 sont couplés entre les lignes L1 et L2 et les contacts 4a3 et 4a4. Les contacts mobiles de ces commutateurs S3 et S4 sont connectés, ou bien, à des conducteurs reliés aux contacts 4a3 et 4a4, ou bien, aux fils T1 et T2.

Ainsi, quand le terminal n'est pas posé sur son socle, le téléphone TEL est couplé à la ligne L téléphonique et fonctionne normalement.

Du côté du terminal portable, quatre contacts 4b1 à 4b4 correspondent respectivement aux contacts 4a1 à 4a4 et, quand le terminal est posé sur le socle, sont respectivement reliés aux fils T1, T2 et aux conducteurs L1, L2. Les contacts 4b1 et 4b2 reliés au téléphone sont normalement couplés à la ligne par des commutateurs S5 et S6. Un circuit de détection 11 est inséré en série avec au moins l'un des fils téléphoniques T1 et T2 pour détecter une éventuelle occupation de la ligne par le téléphone. Un circuit de commande de prise de ligne 12 est susceptible d'actionner des commutateurs S5 et S6 pour relier la ligne à un transformateur de ligne 13 couplé à un modem 14 commandé par une unité centrale (CPU) 15. Le circuit de commande de prise de ligne 12 est actionné, par un ordre en provenance du modem 14 ou du CPU 15 qui tient compte des signaux éventuellement détectés par le circuit 11. On peut ainsi assurer toutes les fonctions de communication souhaitées entre le modem et la ligne.

Le dispositif selon la présente invention est particulièrement simple puisque les circuits électroniques existant dans le terminal portable pour assurer les fonctions de commutation de ligne ne sont pas plus complexes que ceux existant classiquement mais que, par contre, tout système de commutation électronique est supprimé du socle dont le coût sera donc nettement réduit sans augmenter le coût du terminal portable. Les commutateurs S1, S2, S3, S4 sont de préférence réalisés sous forme d'un ensemble mécanique unitaire commandé par le poids du terminal portable quand il est posé sur le socle ou relevé par rapport à celui-ci. Contrairement aux relais commandés, de tels commutateurs mécaniques S1 à S4 peuvent être de petite dimension et de conception simple tout en assurant une fonction d'isolement de haut niveau.

Dans une réalisation pratique, on prévoira un ensemble de pièces mécaniques, réparties entre le socle et le terminal, de formes spécifiques choisies pour assurer de façon fiable, sûre et exclusive le mouvement du dispositif mécanique permettant d'actionner les commutateurs S1 à S4.

## Revendications

1. Ensemble socle/terminal portable dans lequel le socle est relié (1) à un poste téléphonique (TEL) et à une ligne téléphonique (L) et dans lequel la liaison entre le terminal et la ligne téléphonique est assurée quand le terminal est posé sur le socle par des contacts apparents en regard, caractérisé en ce qu'il comprend, pour assurer ladite liaison, quatre contacts (4a1-4a4) sur le socle et quatre contacts (4b1-4b4) sur le terminal, et en ce que le socle comprend des moyens de commutation (S1-S4) actionnés ensemble par le poids du terminal pour,
- quand le terminal est posé sur le socle, relier les quatre contacts du socle, et donc du terminal, respectivement aux deux fils (T1, T2) du téléphone et aux deux conducteurs (L1, L2) de la ligne téléphonique, et
- quand le terminal est soulevé du socle, établir une liaison entre chaque fil de la ligne et chaque fil du téléphone, les contacts du socle (4a1-4a4) n'étant alors plus connectés.

2. Ensemble socle/terminal portable selon la revendication 1, caractérisé en ce que les moyens de commutation comportent quatre commutateurs qui comprennent : un premier et un deuxième commutateur (S1, S2) à une voie entre les fils (T1, T2) du poste téléphonique et les premier et deuxième contacts (4a1, 4a2), ces premier et deuxième commutateurs étant ouverts en l'absence du terminal, et un troisième et un quatrième commutateur (S3, S4) à deux voies dont les bornes fixes sont reliées aux conducteurs (L1, L2) de la ligne et dont les bornes mobiles sont reliées, ou bien, aux bornes (T1, T2) du poste téléphonique, ou bien, en présence du terminal, aux troisième et quatrième contacts (4a3, 4a4).

3. Ensemble socle/terminal portable selon la revendication 2, caractérisé en ce que le terminal portable comprend des cinquième et sixième commutateurs à deux voies (S5, S6) dont les bornes communes sont reliées aux troisième et quatrième contacts (4b3, 4b4) et dont les bornes mobiles sont reliées, ou bien à un transformateur de ligne (13), ou bien aux premier et deuxième contacts (4b1, 4b2), ce terminal comprenant en outre un détecteur de signal (11) interposé entre les premier et deuxième contacts et les bornes mobiles des cinquième et sixième commutateurs, un circuit de prise de ligne (12) et une unité centrale et un modem (14).

## Claims

1. A base/portable terminal assembly in which the base (1) is connected to a telephone set (TEL) and to a telephone line (L) and in which the connection between the terminal and the telephone line is ensured when the terminal is laid on the base with coinciding apparent contacts, characterized in that it includes, to ensure said connection, four contacts (4a1-4a4) on the base and four contacts on the terminal (4b1-4b4), and in that the base includes switching means (S1-S4) driven together by the weight of the terminal for,
- when the terminal rests on the base, connecting the four contacts of the base, and thus of the terminal, respectively to the two wires of the telephone set (T1, T2) and to the two conductors (L1, L2) of the telephone line, and
- when the terminal is lifted up from the base, establishing a connection between each wire of the line and each wire of the telephone set, the base contacts (4a1-4a4) then no longer being connected.

2. The base/portable terminal assembly of claim 1, characterized in that the switching means include four switches that include:
a first and a second one-way switch (S1, S2) between the wires (T1, T2) of the telephone set and the first and second contacts (4a1, 4a2), these first and second switches being open in the absence of the terminal, and
a third and a fourth two-way switch (S3, S4) having their fixed terminals connected to the line conductors (L1, L2) and their mobile terminals connected either to the terminals (T1, T2)of the telephone set, or, in the presence of the terminal, to the third and fourth contacts (4a3, 4a4).

3. The base/portable terminal assembly of claim 2, characterized in that the portable terminal includes fifth and sixth two-way switches (S5, S6) having their common terminals connected to the third and fourth contacts (4b3, 4b4) and having their mobile terminals connected either to a line transformer (13), or to the first and second contacts (4b1, 4b2), this terminal further including a signal detector (11) interposed between the first and second contacts and the mobile terminals of the fifth and sixth switches, a line connection circuit (12) and a central processing terminal and a modem (14).

## Patentansprüche

1. Aggregat aus Basisstation und tragbarem Endgerät, bei welchem die Basisstation (1) mit einem Telephonapparat (TEL) und mit einer Telephonleitung (L) verbunden ist und bei welchem die Verbindung zwischen dem Endgerät und der Telephonleitung im auf die Basisstation aufgelegten Zustand des Endgeräts durch miteinander ausgerichtete offenliegende Kontakte gewährleistet ist,
**dadurch gekennzeichnet**, daß
das Aggregat zur Gewährleistung der genannten Verbindung vier Kontakte (4a1 - 4a4) an der Basistation und vier Kontakte (4b1 - 4b4) an dem Endgerät aufweist und daß die Basisstation Umschaltmittel (S1 - S4) umfaßt, die gemeinsam durch das Gewicht des Endgeräts betätigt werden, derart daß
- im Zustand mit auf die Basisstation aufgelegtem Endgerät die vier Kontakte der Basistation und damit des Endgeräts jeweils mit den beiden Drähten (T1,T2) des Telephons bzw. mit den beiden Leitern (L1,L2) der Telephonleitung verbunden sind, und
- im Zustand mit von der Basisstation abgenommenem Endgerät eine Verbindung jeweils zwischen jedem Draht der Telephonleitung und jedem Draht des Telephons hergestellt ist, wobei die Kontakte (4a1 - 4a4) der Basisstation dann nicht mehr angeschlossen sind.

2. Aggregat aus einer Basisstation und einem tragbaren Endgerät, nach Anspruch 1, dadurch gekennzeichnet, daß die Umschaltmittel vier Schalter aufweisen, welche umfassen:
einen ersten und einen zweiten Einweg-Schalter (S1,S2) zwischen den Drähten (T1,T2) des Telephonapparats und dem ersten und dem zweiten Kontakt (4a1, 4a2), wobei dieser erste und zweite Schalter in Abwesenheit des Endgeräts geöffnet sind,
einen dritten und einen vierten Zweiweg-Schalter (S3, S4), deren Festkontakte mit den Leitern (L1, L2) der Telephonleitung und deren bewegliche Kontakte entweder mit den Anschlüssen (T1, T2) des Telephonapparats oder, in Gegenwart des Endgeräts, mit dem dritten und dem vierten Kontakt (4a3, 4a4) verbunden sind.

3. Aggregat aus einer Basisstation und einem tragbaren Endgerät nach Ansprich 2, dadurch gekennzeichnet, daß das tragbare Endgerät einen fünften und einen sechsten Zweiweg-Schalter (S5, S6) aufweist, deren gemeinsame Anschlüsse mit dem dritten und dem vierten Kontakt (4b3, 4b4) verbunden sind und deren bewegliche Anschlüsse entweder mit einem Leitungstransformator (13) oder mit dem ersten und dem zweiten Kontakt (4b1, 4b2) verbunden sind, und daß das Endgerät des weiteren einen zwischen dem ersten und dem zweiten Kontakt und den beweglichen Anschlüssen des fünften und sechsten Schalters angeordneten Signaldetektor, eine Leitungsbelegungsschaltung (12), eine zentrale Prozessoreinheit und ein Modem (14) aufweist.
